# EUROPEAN PATENT SPECIFICATION

(11) **EP 3 730 827 B1**
(45) Date of publication and mention of the grant of the patent: **22.12.2021**
(21) Application number: 20170600.9
(22) Date of filing: 21.04.2020
(51) Int. Cl.: F16L 23/04, F16L 37/12, F16L 37/248

(54) **WATERPROOF DEMOUNTABLE JOINT**
WASSERDICHTES DEMONTIERBARES GELENK
JOINT DÉMONTABLE ÉTANCHE À L'EAU

(30) Priority: 23.04.2019 SK 462019
(43) Date of publication of application: 28.10.2020
(73) Proprietor: Vaillant GmbH, 42859 Remscheid (DE); Protherm Production s.r.o., 909 01 Skalica (SK)
(72) Inventor: Vyskocilová, Martina, 90851 Holíc (SK); Kovár, Stanislav, 906 31 Hlboké (SK)
(74) Representative: Popp, Carsten

(56) References cited:
- WO-A1-2015/105626
- WO-A2-2011/035035
- DE-A1- 10 029 366
- FR-A1- 2 895 057

## Description

### Field of the Invention

The invention is related to waterproof demountable joint of two tubular components, which are placed within restrictive or poorly accessible area, mainly in heating boilers.

### Background of the Invention

The heating equipment with circulating heating medium, particularly the boilers for heating of residential rooms and production of hot service water for households and other buildings is connected to external water piping by the mean of connecting tubes, and connection sets are manufactured for this purpose.

The most frequent method of tubes interconnection is the production of threaded connection by the mean of union nut and threaded nipple, which the tubes to be joined are equipped with.

In practice, the copper tube is provided with a brass nut with metric thread before the beading. Second tube to be joined has a thread for screw their loose end of the union nut on, and the connection is sealed, e.g., with a gasket seal placed between the ends of both tubes. To improve the sealing parameters, also O-ring is used.

The drawback of this connection mechanism is the need for replacement of the whole assembly if either the nut or the tube are damaged. Further drawback is that such mechanism is not suitable for use in restrictive areas, e.g., inside heating equipment.

Inside the equipment, water is circulating in tubes with smaller diameters, which are joined to various valves and other devices such as pumps in order to ensure the circulation, connections are placed within a significantly restricting area. These valves as well as entire hydraulic units are equipped with connectors allowing the use of other than threaded connections.

Therefore, in compact hydraulic modules, which are parts of heating equipment, the possibilities of connections by quick couplers with various designs are increasingly used.

The use of bayonet mechanism appears to be very advantageous solution for joining fluid pipes due to its simple installation and appropriate sealing performance.

Conventional bayonet connector is a fitting mechanism consisting of male cylindrical piece with one or more radially arranged pins, and female piece with correspondingly arranged slots. The slots are L-shaped, with short vertical channeling section aiming upwards to the coupling; this section is located at the end of a longer horizontal section. A pin on the male piece is inserted into the slot vertical section and turned throughout the horizontal section until the pin reaches the horizontal section bottom. The bayonet connector is usually sealed with an O-ring and can be equipped with locking spring.

According the state of art, the bayonet connection pieces are joined by inserting each other in the direction of the connection axis (axially) and by the subsequent closure of the coupling by turning it around the connection axis.

However, such bayonet connection requires free rotation of one of the pieces to be joined; and this is not possible in restrictive or poorly accessible areas.

Solutions using modified bayonet connection are known.

In the state of the art, a document EP 1703192 A1 is published; this discloses a bayonet connection for tubular connection piece and the joining piece, which might join it whereas this bayonet connection requires, in addition to the connection piece and the joining piece, an additional bow-shaped locking body, which connects the connection piece with the joining piece in order to produce a positive connection. The bayonet connection is sealed with a gasket seal or an O-ring.

In this case, the notion of bayonet connection means a connection which achieves positive connection by translatorial movement in the direction of the connection axis, and the subsequent rotation of the locking body.

The document FR2895057 A1 discloses a quick coupler design for air nozzle distribution lines designed for hot tubs and bubble baths, whereas the coupling is placed in poorly accessible area under the tub, and therefore, no known tightening tools can be used for the coupling installation and the plumber shall carry out the tightening manually.

In order to achieve the connections of two tubular connections, the disclosed invention utilizes two-piece nut consisting of two identical parts connected by snapping. Special design of the nut and one terminal coupling allows the production of bayonet connection. While turning the assembled nut, the connection tightness is achieved by the mean of O-ring placed in the second of the components to be connected, and the nut is tightened manually as much as possible by the mean of ratchet-and-pawl type system.

This results in sealed connection demountable only by the mean of special tool or by destruction as the connection integrity is the condition necessary to ensure its tightness.

The use of nuts consisting of several pieces is advantageous in case of installation to be carried out in restrictive areas as the nut is assembled directly at the installation. Such nuts, manufactured with threads, are known in the state of the art for longer time ago, and the use of bayonet nuts consisting of several pieces is less usual.

The drawback of both above solutions consists in the fact that their structure unfit for sealing by the mean of elastic C-seal whose sealing performance are more advantageous for use in heating equipment than those of O-rings or gasket seals. Unlike gasket seals and O-rings, which must be fully compressed at the connection, C-seal is more flexible and sealed with greater tolerance allowances.

C-seals are more flexible than O-rings; in case of increased pressure of the flowing medium, the former are able to achieve excellent sealing performance.

An important feature of the C-seal is that during operation of the device, the flowing liquid fills the inner cavity of the seal and helps to create a sealing force due to its own pressure. It is a static seal and, because it seals the parts that are relatively static to each other, there is no mechanical wear of the seal during operation. The elastic seal material has the strength to retain the C-shape of the seal and absorb radial forces acting on the coupling region of the coupling mechanism, such as vibration.

The present invention eliminates the drawbacks of the previous solutions, and allows the use of C-seal as well as the tightening or loosening of the bayonet connection by the mean of hexagonal wrench.

### Summary of the Invention

Waterproof demountable joint includes the first tubular component, second tubular component, two-piece coupling nut and C-seal.

On its end, the first component to be joined has a radially protruding ring designed to be retained by the flange in a two-piece coupling nut with suitable structure, and the second component to be joined has, on its end outer surface, radially arranged bayonet pins, which fit into the bayonet slots in the two-piece coupling nut.

The connection is produced by the rotation of the two-piece coupling nut retained by the bayonet slots around the pins, and the connection is sealed with C-seal.

The two-piece coupling nut with an innovative construction consists of two identical segments, which, after being mutually connected by snapping, produce a nut with bayonet slots located on the perimeter, and the bayonet pins located on the perimeter of the connecting neck will fit into these bayonet slots. Another advantageous structural detail is the fact that the assembled nut has, on its perimeter, a hexagonal edge allowing the connection tightening or loosening using the wrench.

The beaded copper tube or plastic tube constituting the first tubular component is equipped with radially protruding ring surrounding the tube end. The connecting neck of the second tubular component has also a radial end. Between both ends, C-seal is inserted on their sealing faces.

The two-piece coupling nut is designed to surround the tube end and connecting neck end by the mean of its annular opening.

The nut annular opening extends between its opposite front surfaces, and this opening has different structure next to each front surface.

On one end of the annular opening, the structure includes a flange for retaining of the first tubular component after the segments are joined by snapping at the extreme of the first tubular component. At the same time, the flange serves to retain one outer radial surface of the C-seal.

On the other extreme, the structure includes the slots located on the perimeter in order to be coordinated with the pins of the second tubular component.

After the nut assembly, both front surface constitute a hexagonal shape allowing the use of the tightening wrench.

The nut segments are made of sufficiently strong and elastic material, and two-piece coupling nut size can be adapted to various tube diameters and / or shapes.

In an advantageous embodiment, for the nut segments interconnection, there is a groove ending with notch, and a tongue equipped with hook-shaped bend, which snaps into groove and notch. There can be more than one tongue and the corresponding grooves located alongside each other, depending on the nut segments size.

The shape of tongues and the corresponding grooves can be different; their purpose is a simple connection and disconnection of the nut segments with no use of especial tools.

### Brief Description of the Drawings

The technical solution is further explained in drawings, but not limited to them.
Fig.1 shows the prior state of the art: connection tube with a threaded union nut
Figs. 2a, 2b and 2c show the detailed procedure of the two tubular components assembly by the mean of two-piece coupling nut in the disclosed waterproof demountable joint
Fig. 3 shows the segment details of the two-piece coupling nut
Fig. 4 shows the cross-section of the connection tube with the connecting neck of the second tubular component using C-seal and two-piece coupling nut in the disclosed waterproof demountable joint

### Example of Embodiment

Waterproof demountable joint includes the first tubular component 1, second tubular component 15, two-piece coupling nut 5 and C-seal 14. The two-piece coupling nut 5 consists of two identical segments 5a, 5b.

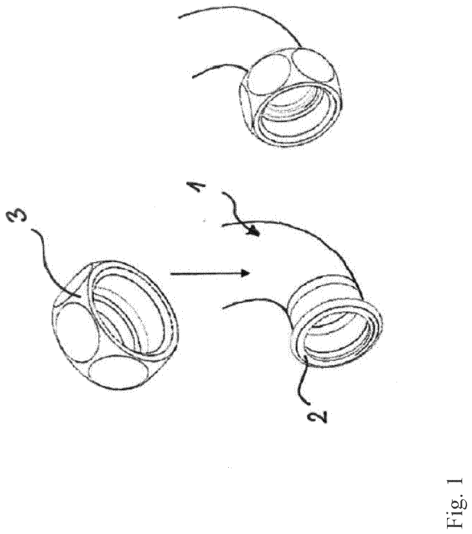

In the embodiment, the first tubular component is a connection tube 1 provided with a radially protruding ring 2 on its end. Within state of the art, such connection tube as shown in Fig. 1 is connected to another tubular component by the mean of union nut 3 with female thread.

Second tubular component 15 is provided with connecting neck 4 with radial outlet, and equipped in the outlet outer surface with radially arranged bayonet pins 10 to be snapped into bayonet slots 11 of the two-piece coupling nut 5.

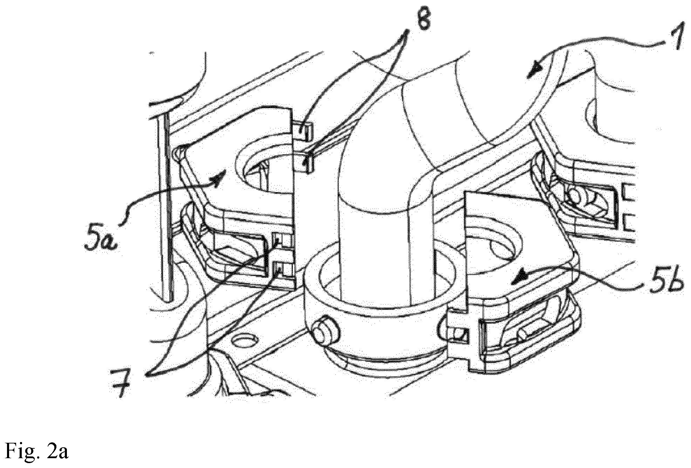

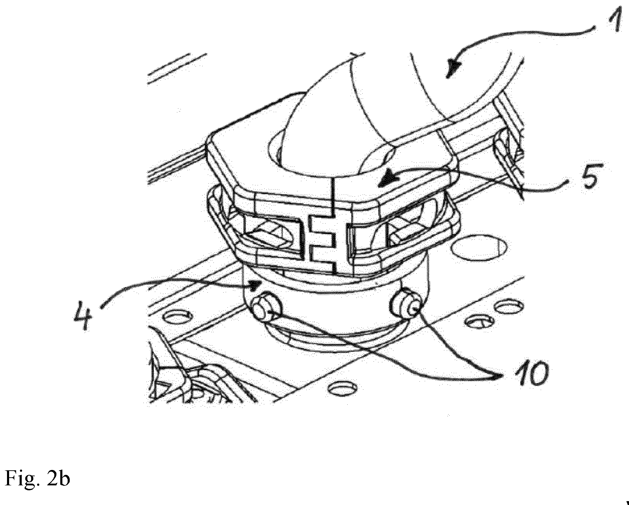

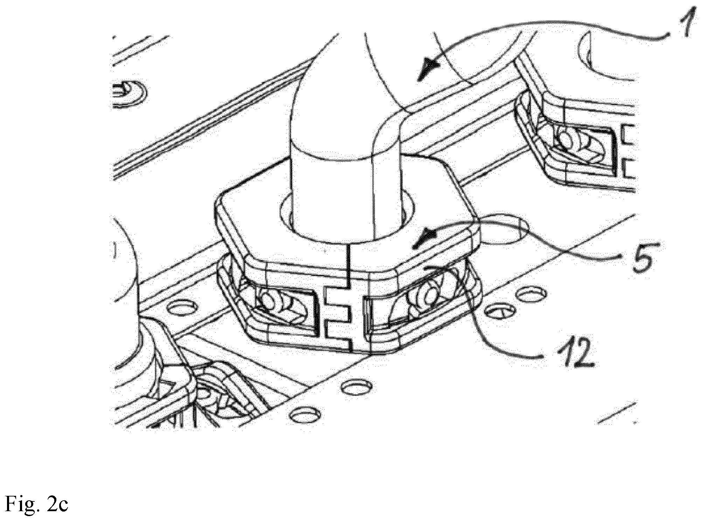

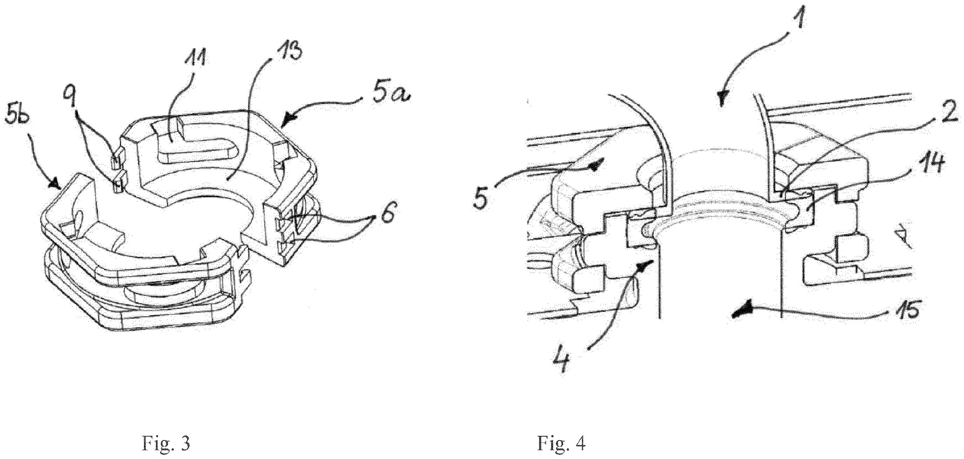

Figs. 2a, 2b and 2c show the assembly gradual steps using the two-piece coupling nut 5 and resulting in waterproof demountable joint under the presented invention, and Fig. 4 shows the waterproof demountable joint cross-section.

The employee who carries out the assembly, shall put closer the ends of the tubular components 1 and 15 to be joined, and inserts the C-seal 14 between them. The segments 5a, 5b surround the first tubular component 1 and snap them into the two-piece coupling nut 5.

Each of the segments 5a, 5b is provided with at least one tongue 8 and at least one groove 6. Each tongue 8 is provided at its free end with a bend 9 and each groove 6 is terminated by a notch 7.

To connect the segments 5a, 5b to the two-part coupling nut 5, the tongue 8 is inserted into the groove 6 and, when snapped, the bend 9 is pressed into a notch 7 arranged at the end of the groove 6.

The two-piece coupling nut 5 is pushed onto the bayonet projections 10 arranged on the connecting neck 4 of the second tubular component 15 by means of the bayonet slots 11.

Turning the nut 5, the waterproof demountable joint will be produced; if necessary, the connection can be tightened by hexagonal wrench or by hand.

### Industrial Applicability

The presented invention of waterproof demountable joint of two tubular components by the mean of two-piece coupling nut and C-seal is dealing with the issue of waterproof connection assembly in restrictive areas, and if needed, it also makes possible the subsequent replacement of any damaged part of the connection.

The presented invention can be used, for instance, to join metal or plastic connection tube with a tubular connector, which can be a part of either heating equipment hydraulic unit body or some hydraulic component such as circulation pump.

The coupling nut consists of two pieces and allows the production of waterproof demountable connection in restrictive areas.

### Reference numerals

- 1 -: first tubular component
- 2 -: radially protruding ring
- 3 -: union nut
- 4 -: connecting neck
- 5 ―: two-piece coupling nut
- 6 -: groove
- 7 -: notch
- 8 -: tongue
- 9 -: bend
- 10 -: bayonet pin
- 11 -: bayonet slot
- 12 -: hexagonal edge
- 13 -: flange
- 14 -: C-seal
- 15 -: second tubular component

## Claims

1. A waterproof demountable joint including a first tubular component, a second tubular component, a two-piece coupling nut and a C-seal,
**characterized in that**
the two-piece coupling nut (5) consists of two mechanically connectable identical segments (5a, 5b),
the first tubular component (1) is provided on its end with a radially protruding ring (2) to retain in the flange (13) of the two-piece coupling nut (5),
the second tubular component (15) is provided with connecting neck (4) with the radial outlet, and its outer surface is provided with radially arranged bayonet pins (10) to be snapped into bayonet slots (11) of the two-piece coupling nut (5),
the C-seal (14) is placed between the outlet of the first tubular component (1) and the outlet of the second tubular component (15).

2. Waterproof demountable joint according to claim 1,
**characterized in that**
each of segments (5a, 5b) is provided at least with one tongue (8) and at least with one groove (6),
each tongue (8) is provided with a bend (9) on its loose end, and each groove (6) is ended with a notch (7),
the two-piece coupling nut (5) is assembled by snapping the tongue (8) of one segment (5a,5b) into the groove (6) of the second segment (5a, 5b).

3. Waterproof demountable joint according to claim 1 or 2,
**characterized in that**
the two-piece coupling nut (5) is provided with edges (12) creating a hexagon on its perimeter.

## Patentansprüche

1. Wasserdichte demontierbare Dichtung, die ein erstes röhrenförmiges Bauteil, ein zweites röhrenförmiges Bauteil, eine zweiteilige Spannmutter und eine C-Dichtung beinhaltet,
**dadurch gekennzeichnet, dass**
die zweiteilige Spannmutter (5) aus zwei mechanisch verbindbaren identischen Segmenten (5a, 5b) besteht,
das erste röhrenförmige Bauteil (1) auf seinem Ende mit einem radial vorragenden Ring (2) versehen ist, um in dem Flansch (13) der zweiteiligen Spannmutter (5) zu halten,
das zweite röhrenförmige Bauteil (15) mit einem Verbindungshals (4) mit dem radialen Auslass versehen ist, und seine Außenoberfläche mit radial eingerichteten Bajonettstiften (10) versehen ist, die in Bajonettschlitze (11) der zweiteiligen Spannmutter (5) einzurasten sind,
die C-Dichtung (14) zwischen dem Auslass des ersten röhrenförmigen Bauteils (1) und dem Auslass des zweiten röhrenförmigen Bauteils (15) platziert ist.

2. Wasserdichte demontierbare Dichtung nach Anspruch 1,
**dadurch gekennzeichnet, dass**
jedes der Segmente (5a, 5b) mit mindestens einer Feder (8) und mindestens einer Nut (6) versehen ist,
jede Feder (8) mit einer Biegung (9) auf ihrem losen Ende versehen ist, und jede Nut (6) mit einer Kerbe (7) endet,
die zweiteilige Spannmutter (5) durch Einrasten der Feder (8) des einen Segments (5a, 5b) in der Nut (6) des zweiten Segments (5a, 5b) zusammengefügt wird.

3. Wasserdichte demontierbare Dichtung nach Anspruch 1 oder 2,
**dadurch gekennzeichnet, dass**
die zweiteilige Spannmutter (5) mit Kanten (12), die ein Sechseck auf ihrem Umfang bilden, versehen ist.

## Revendications

1. Joint démontable étanche à l'eau comportant un premier composant tubulaire, un second composant tubulaire, un écrou de couplage en deux pièces et un joint étanche en C,
**caractérisé en ce que**
l'écrou de couplage en deux pièces (5) se compose de deux segments identiques pouvant être reliés mécaniquement (5a, 5b),
le premier composant tubulaire (1) est doté sur son extrémité d'un anneau en saillie radialement (2) pour sa retenue dans la bride (13) de l'écrou de couplage en deux pièces (5),
le second composant tubulaire (15) est doté d'un col de liaison (4) avec la sortie radiale, et sa surface extérieure est dotée de broches à baïonnette (10) agencées radialement à enclencher dans des fentes à baïonnette (11) de l'écrou de couplage en deux pièces (5),
le joint étanche en C(14) est placé entre la sortie du premier composant tubulaire (1) et la sortie du second composant tubulaire (15).

2. Joint démontable étanche à l'eau selon la revendication 1,
**caractérisé en ce que**
chacun des segments (5a, 5b) est doté d'au moins une languette (8) et d'au moins une rainure (6),
chaque languette (8) est dotée d'un pli (9) sur son extrémité lâche, et chaque rainure (6) est terminée par une encoche (7),
l'écrou de couplage en deux pièces (5) est assemblé par enclenchement de la languette (8) d'un segment (5a, 5b) dans la rainure (6) du second segment (5a, 5b).

3. Joint démontable étanche à l'eau selon la revendication 1 ou 2,
**caractérisé en ce que**
l'écrou de couplage en deux pièces (5) est doté d'arêtes (12) créant un hexagone sur son périmètre.
